# EUROPEAN PATENT APPLICATION

(11) **EP 4 106 365 A1**
(43) Date of publication of application: **21.12.2022**
(21) Application number: 21752880.1
(22) Date of filing: 07.02.2021
(51) Int. Cl.: H04W 4/80

(54) **BLUETOOTH NETWORK-BASED COMMUNICATION METHOD, AND NODE AND COMMUNICATION SYSTEM THEREOF**

(30) Priority: 12.02.2020 CN 202010089201
(71) Applicant: ALIBABA GROUP HOLDING LIMITED, George Town, Grand Cayman (KY)
(72) Inventor: AN, Qing, Hangzhou, Zhejiang 311121 (CN); LIU, Dapeng, Hangzhou, Zhejiang 311121 (CN); YU, Xiaobo, Hangzhou, Zhejiang 311121 (CN)
(74) Representative: Boult Wade Tennant LLP
(86) International application number: PCT/CN2021/075747
(87) International publication number: WO 2021/160062

(57) **Abstract**

Provided in the example embodiments are a communication method employing a Bluetooth network, and a node and a communication system applying the same. The communication method applicable to a Bluetooth end node includes: if there is a relay node in neighboring Bluetooth nodes, performing data communication via the relay node; and if there is no relay node in the neighboring Bluetooth nodes, sending a relay configuration request message by broadcast to request a gateway node to select and configure a relay node from the neighboring Bluetooth nodes. The communication method employing a Bluetooth network, and the node and the communication system applying the same provided in the example embodiments can flexibly configure a minimum number of relay nodes according to an actual network topology, thereby preventing the problem in which many relay nodes in a network result in forwarding of a large number of broadcast packets and consequently affect the throughput of the network.

## Description

### CROSS-REFERENCE TO RELATED APPLICATIONS

This application is a national stage application of Int'l Appl. No. PCT/CN21/75747, filed Feb. 7, 2021 which claims priority to Chinese Appl. No. 202010089201.9 filed Feb. 12, 2020, both of which are incorporated by reference in their entirety.

### BACKGROUND

### Technical Field

The example embodiments relate to the field of information technology and particularly to a communications method employing a Bluetooth network and a node and a communication system applying the same.

### Description of the Related Art

In Internet of Things (IoT) device communication, the Bluetooth mesh protocol released by the Bluetooth Special Interest Group (SIG) can implement a mesh network topology, support multi-hop connections, and expand the coverage of Bluetooth networks. This Bluetooth mesh protocol is especially suitable for scenarios of IoT device communication in smart homes and smart buildings. However, the Bluetooth mesh protocol is a communication mechanism based on broadcast flooding. Each Bluetooth mesh node sends a Bluetooth mesh message by means of a broadcast packet. After receiving the broadcast packet, all other nodes will forward the broadcast packet once until a destination address node receives this Bluetooth mesh message. Such a configuration causes some invalid and unnecessary broadcast packets to be sent in a Bluetooth mesh network, consequently affecting the throughput of the Bluetooth mesh network.

### SUMMARY

The example embodiments provide a communication method employing a Bluetooth network, and a node and a communication system applying the same, to solve the problem in which existing Bluetooth networks have excessively high throughput.

According to a first embodiment, provided is a communication method employing a Bluetooth network applicable to a Bluetooth end node, the method comprising: if there is a relay node in neighboring Bluetooth nodes, performing data communication via the relay node; and if there is no relay node in the neighboring Bluetooth nodes, sending a relay configuration request message by broadcast to request a gateway node to select and configure a relay node from the neighboring Bluetooth nodes.

Further, the communication method according to the first embodiment further comprises: if a relay notification message sent by one of the neighboring Bluetooth nodes is received, recording the neighboring Bluetooth node as a relay node.

Further, the communication method according to the first embodiment further comprises: sending the relay notification message by broadcast.

According to a second embodiment, provided is a communication method employing a Bluetooth network applicable to a Bluetooth gateway node, the method comprising: receiving a relay configuration request message, wherein the relay configuration request message comprises a propagation path having an end node, intermediate nodes, and a gateway node arranged in sequence; selecting a relay node from the intermediate nodes of the propagation path according to a preset selection condition; and sending a relay enable request to the relay node, wherein the relay enable request comprises address information of the end node.

Further, in the communication method according to the second embodiment, the preset selection condition comprises: selecting a Bluetooth node provided with a long-term power supply; selecting a Bluetooth node that has high signal strength relative to that of a requesting Bluetooth node compared with other Bluetooth nodes; selecting a Bluetooth node having a longer online duration compared with other Bluetooth nodes; or selecting a Bluetooth node at which the relay configuration request message arrives earlier compared with other Bluetooth nodes.

Further, the communication method according to the second embodiment further comprises: if it is found that the relay node of the end node has changed, sending a child node list update message to the original relay node.

According to a third embodiment, provided is a communication method employing a Bluetooth network applicable to a Bluetooth relay node, the method comprising: receiving a relay configuration request message; if a relay function is enabled, adding address information of a local node to the relay configuration request message, and sending the relay configuration request message by broadcast; and if the relay function is not enabled, adding the address information of the local node to only a relay configuration request message that has not been forwarded, and sending, by broadcast, the relay configuration request message that has not been forwarded.

Further, the communication method according to the third embodiment further comprises: enabling the relay function according to a relay enable request, wherein the relay enable request comprises address information of an end node; recording the end node in a local node list; and sending a relay notification message to the end node.

Further, the communication method according to the third embodiment further comprises: if a child node list update message is received, deleting a changed end node from the local node list according to the child node list update message.

Further, the communication method according to the third embodiment further comprises: if a network connection fails, disabling the relay function, and sending a relay configuration request message to a neighboring Bluetooth node by broadcast.

According to a fourth embodiment, provided is a Bluetooth end node, comprising: a communication module configured such that if there is a relay node in neighboring Bluetooth nodes, the communication module performs data communication via the relay node; and a broadcast module configured such that if there is no relay node in the neighboring Bluetooth nodes, the broadcast module sends a relay configuration request message by broadcast to request a gateway node to select and configure a relay node from the neighboring Bluetooth nodes.

Further, the Bluetooth end node according to the fourth embodiment further comprises: a relay node recording module configured such that if a relay notification message sent by one of the neighboring Bluetooth nodes is received, the relay node recording module records the neighboring Bluetooth node as a relay node.

Further, in the Bluetooth end node according to the fourth embodiment, the broadcast module is further configured to: send the relay notification message by broadcast.

According to a fifth embodiment, provided is a Bluetooth gateway node, comprising: a first receiving module, configured to receive a relay configuration request message, wherein the relay configuration request message comprises a propagation path having an end node, intermediate nodes, and a gateway node arranged in sequence; a relay node configuration module, configured to select a relay node from the intermediate nodes of the propagation path according to a preset selection condition; and a relay node startup module, configured to send a relay enable request to the relay node, wherein the relay enable request comprises address information of the end node.

Further, in the Bluetooth gateway node according to the fifth embodiment, the preset selection condition comprises: selecting a Bluetooth node provided with a long-term power supply; selecting a Bluetooth node that has high signal strength relative to that of a requesting Bluetooth node compared with other Bluetooth nodes; selecting a Bluetooth node having a longer online duration compared with other Bluetooth nodes; or selecting a Bluetooth node at which the relay configuration request message arrives earlier compared with other Bluetooth nodes.

Further, the Bluetooth gateway node according to the fifth embodiment further comprises: a first update module configured such that if it is found that the relay node of the end node has changed, the first update module sends a child node list update message to the original relay node.

According to a sixth embodiment, provided is a Bluetooth relay node, comprising: a second receiving module, configured to receive a relay configuration request message; and a relay function module, configured to if a relay function is enabled, add address information of a local node to the relay configuration request message, and send the relay configuration request message by broadcast; and if the relay function is not enabled, add the address information of the local node to only a relay configuration request message that has not been forwarded, and send, by broadcast, the relay configuration request message that has not been forwarded.

Further, in the Bluetooth relay node according to the sixth embodiment, the relay function module is further configured to enable the relay function according to a relay enable request, wherein the relay enable request comprises address information of an end node; record the end node in a local node list; and send a relay notification message to the end node.

Further, the Bluetooth relay node according to the sixth embodiment further comprises: a second update module configured such that if a child node list update message is received, the second update module deletes a changed end node from the local node list according to the child node list update message.

Further, the Bluetooth relay node according to the sixth embodiment further comprises: a reset module configured such that if a network connection fails, the reset module disables the relay function, and sends a relay configuration request message to a neighboring Bluetooth node by broadcast.

According to a seventh embodiment, provided is a Bluetooth communication network system, comprising: the Bluetooth end node according to the fourth embodiment, the Bluetooth gateway node according to the fifth embodiment, and the Bluetooth relay node according to the sixth embodiment.

According to an eighth embodiment, provided is a storage device, wherein the storage device stores computer program instructions, which are executed according to the method of the example embodiments.

According to a ninth embodiment, provided is a computing device, comprising: a memory for storing computer program instructions; and a processor for executing the computer program instructions, wherein the computer program instructions, when executed by the processor, trigger the computing device to implement the method of the example embodiments.

The communication method employing a Bluetooth network, and the node and the communication system applying the same provided in the example embodiments can flexibly configure a minimum number of relay nodes according to an actual network topology, thereby preventing the problem in which many relay nodes in a network result in forwarding of a large number of broadcast packets and consequently affect the throughput of the network.

### BRIEF DESCRIPTION OF THE DRAWINGS

Other features, objectives, and advantages of the example embodiments are described in the detailed description of non-limiting embodiments formed with reference to the following drawings.
FIG. 1 is a flow diagram illustrating a method employing a Bluetooth network according to some of the example embodiments.
FIG. 2 is a diagram of the topology of the Bluetooth network according to some of the example embodiments.
FIG. 3 is a flow diagram illustrating a method employing a Bluetooth network according to some of the example embodiments.
FIG. 4 is a diagram of a change in the topology of the Bluetooth network according to some of the example embodiments.
FIG. 5 is a flow diagram illustrating a method employing a Bluetooth network according to some of the example embodiments.
FIG. 6 is a block diagram of a Bluetooth end node according to some of the example embodiments.
FIG. 7 is a block diagram of a Bluetooth gateway node according to some of the example embodiments.
FIG. 8 is a block diagram of a Bluetooth relay node according to some of the example embodiments.
FIG. 9 is a block diagram of a Bluetooth communication network system according to some of the example embodiments.

The same or similar reference numerals in the drawings represent the same or similar components.

### DETAILED DESCRIPTION

The example embodiments will be described in further detail below with reference to the accompanying drawings.

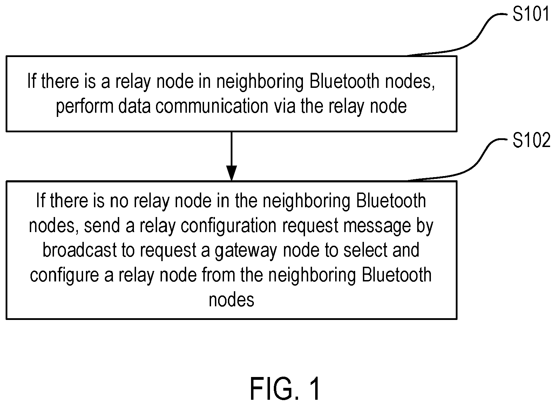

FIG. 1 is a flow diagram illustrating a method employing a Bluetooth network according to some of the example embodiments. As shown in FIG. 1, the communication method employing a Bluetooth network may be executed by a Bluetooth end node and includes the following steps

**Step S101:** if there is a relay node in neighboring Bluetooth nodes, perform data communication via the relay node.

**Step S102:** if there is no relay node in the neighboring Bluetooth nodes, send a relay configuration request message by broadcast to request a gateway node to select and configure a relay node from the neighboring Bluetooth nodes.

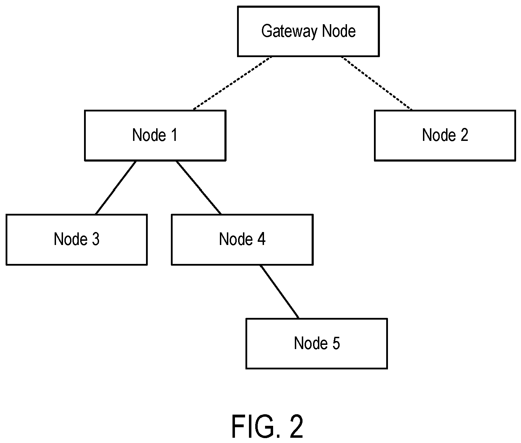

FIG. 2 is a diagram of the topology of the Bluetooth network according to some of the example embodiments.

As shown in FIG. 2, the Bluetooth network in the embodiment of the example embodiments includes a gateway node 200, node 1, node 2, node 3, node 4, and node 5. Each node can use a normal Bluetooth device, and the gateway node can meet the minimum network computing and storage requirements of the Bluetooth network. At the initial stage, the Bluetooth network only has the gateway node and the gateway node has a relay function. First, node 1 applies to join the Bluetooth network. After node 1 joins the network, node 1 starts a neighboring node scan (neighbor_discover) and finds that there is a node with a relay function (i.e., the gateway node) in surrounding neighboring nodes, and therefore chooses not to enable a relay function. Afterward, node 2 applies to join the Bluetooth network. Similarly, node 2 starts a neighboring node scan (neighbor_discover) and finds that there is a node with a relay function, namely the gateway node, in surrounding neighboring nodes, and therefore chooses not to enable a relay function. Next, node 3 applies to join the Bluetooth network. Similarly, node 3 starts a neighboring node scan (neighbor_discover) and finds that node 1 and node 2 in surrounding neighboring nodes, but both of the nodes are not nodes with a relay function. Thus, node 3 sends a relay configuration request message (relay_config) by broadcast. Both node 1 and node 2 receive the relay configuration request message (relay_config) and add address information of node 1 and node 2 to the relay_config packet respectively, and then forward the same to the gateway node by broadcast. Next, the gateway node receives the relay configuration request messages (relay_config) from node 1 and node 2 respectively. The relay_config messages include two paths: node 3 to node 1 to the gateway node; and node 3 to node 2 to the gateway node.

The gateway node selects node 1 or node 2 to enable the relay function according to a preset selection condition associated with a respective node, such as whether a long-term power supply is provided or not, signal strength, online duration, and request arrival time. For example, the gateway node selects node 1 to enable the relay function and sends a relay enable request (enable_relay) to node 1. The request includes address information of node 3. After receiving the relay enable request (enable_relay), node 1 enables the relay function and returns a success reply to the gateway node to indicate that the relay function has been successfully enabled. Furthermore, node 1 maintains a child node list locally, records that node 3 is one of end nodes of relay node 1, and at the same time sends a relay notification message (relay_notification) to node 3 to inform node 3 that a neighboring relay node thereof is node 1. In this case, node 3 and node 2 are end nodes, and node 1 is a relay node. When node 3 is to perform data communication, node 3 checks a local node list and finds that node 1 is a relay node for node 3. In this case, node 3 performs data communication via node 1. If node 3 is moved and cannot connect to node 1, node 3 performs a neighboring node scan (neighbor_discover). If node 1 is not found in neighboring nodes, that is, there is no node with a relay function, node 3 sends a relay configuration request message by broadcast, and the relay configuration request message is sent to the gateway node via other nodes (as discussed). The gateway node automatically configures a relay function, such that node 3 is reconnected to the Bluetooth network.

In response to a newly added node, an end node may also become a relay node. When the number of end nodes reduces, a relay node may also become an end node. That is, excluding the gateway node, each network node may (based on an instruction of the gateway node) enable a relay function to become a relay node or refrain from enabling the relay function to become an end node.

The communication method employing a Bluetooth network can flexibly configure a minimum number of relay nodes according to an actual network topology, thereby preventing the problem in which many relay nodes in a network result in the forwarding of a large number of broadcast packets and consequently affect the throughput of the network.

Further, in some embodiments, the communication method can include the following additional or optional step.

Step S103: if a relay notification message sent by one of the neighboring Bluetooth nodes is received, record the neighboring Bluetooth node as a relay node.

Further, in some embodiments, the communication method can include the following additional or optional step.

Step S104: send the relay notification message by broadcast.

Specifically, after receiving the relay notification message (i.e., after learning that node 1 has a relay function), node 3 may notify other neighboring nodes of the same. When the other neighboring nodes of node 3 need to connect to the Bluetooth network, the neighboring nodes may directly establish connections via node 1, thereby preventing the neighboring nodes from repeatedly sending relay configuration request messages, and further reducing the throughput of the network.

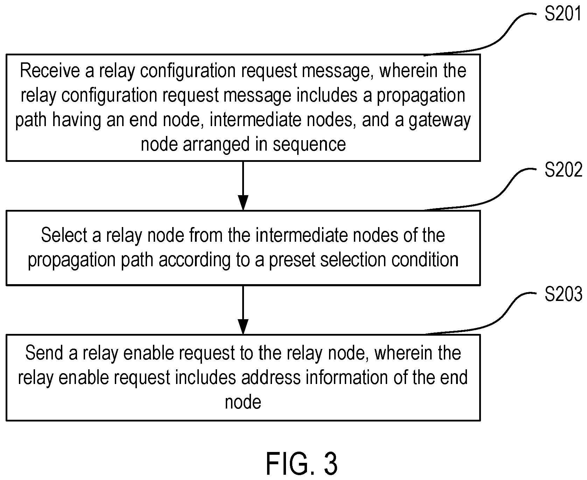

FIG. 3 is a flow diagram illustrating a method employing a Bluetooth network according to some of the example embodiments. As shown in FIG. 3, the communication method employing a Bluetooth network may be executed by a Bluetooth gateway node and includes the following steps.

**Step S201:** receive a relay configuration request message, wherein the relay configuration request message includes a propagation path having an end node, intermediate nodes, and a gateway node arranged in sequence.

**Step S202:** select a relay node from the intermediate nodes of the propagation path according to a preset selection condition applied to the intermediate nodes.

**Step S203:** send a relay enable request to the relay node, wherein the relay enable request includes address information of the end node.

As shown in FIG. 2, node 1 applies to join the Bluetooth network. After node 1 joins the network, node 1 starts a neighboring node scan (neighbor_discover) and finds that there is a node with a relay function, namely the gateway node, in surrounding neighboring nodes, and therefore chooses not to enable a relay function. Next, node 2 applies to join the Bluetooth network. Similarly, node 2 starts a neighboring node scan (neighbor_discover) and finds that there is a node with a relay function, namely the gateway node, in surrounding neighboring nodes, and therefore chooses not to enable a relay function. Next, node 3 applies to join the Bluetooth network. Similarly, node 3 starts a neighboring node scan (neighbor_discover) and finds node 1 and node 2 in surrounding neighboring nodes, but both nodes do not provide a relay function. Thus, node 3 sends a relay configuration request message (relay_config) by broadcast. Both node 1 and node 2 receive the relay configuration request message (relay_config) and add address information of node 1 and node 2 to the relay_config packet respectively, and then forward the same to the gateway node by broadcast. Next, the gateway node receives the relay configuration request messages (relay_config) from node 1 and node 2 respectively. The relay_config messages include two paths: node 3 to node 1 to the gateway node; and node 3 to node 2 to the gateway node.

The gateway node selects node 1 or node 2 to enable the relay function according to a preset selection condition associated with the nodes, such as whether a long-term power supply is provided or not, signal strength, online duration, and request arrival time. For example, the gateway node selects node 1 to enable the relay function and sends a relay enable request (enable_relay) to node 1. The request includes the address information of node 3. After receiving the relay enable request (enable_relay), node 1 enables the relay function and returns a success reply to the gateway node to indicate that the relay function has been successfully enabled. Furthermore, node 1 maintains a child node list locally, records that node 3 is one of the end nodes of relay node 1, and at the same time sends a relay notification message (relay_notification) to node 3 to inform node 3 that a neighboring relay node thereof is node 1. In this case, node 3 and node 2 are end nodes, and node 1 is a relay node. When node 3 is to perform data communication, node 3 checks a local node list and finds that node 1 is a relay node thereof. In this case, node 3 performs data communication via node 1.

As shown in FIG. 2, for example, node 4 applies to join the Bluetooth network. Similarly, node 4 starts a neighboring node scan (neighbor_discover) and finds that surrounding neighbors include node 1, node 2, and node 3, in which node 1 has enabled a relay function. In this case, node 4 chooses not to enable a relay function. Node 5 applies to join the Bluetooth network. Similarly, node 5 starts a neighboring node scan (neighbor_discover) and finds that surrounding neighbors include node 2, node 3, and node 4, but none of the nodes has enabled a relay function. Thus, node 5 sends a relay configuration request message (relay_config) to the gateway device and the message is also sent in the form of a Bluetooth mesh broadcast packet. Node 2, node 3, and node 4 all receive the relay configuration request message (relay_config) and add address information of node 2, node 3, and node 4 to the relay_config packet respectively, and then forward the same by broadcast. The relay_config packet forwarded by node 4 reaches node 1, node 2, and node 3, respectively. Node 2 and node 3 find that the relay_config packet has been forwarded once, and therefore will not forward the packet again. Since node 1 is a relay node, node 1 also adds node address information thereof to the relay_config packet and broadcasts and forwards the relay_config again. Next, the gateway node receives the relay_config packets from four different paths, namely:
1) node 5 -> node 3 -> node 1 -> gateway node
2) node 5 -> node 4 -> node 1 -> gateway node
3) node 5 -> node 2 -> gateway node
4) node 5 -> node 2 -> node 1 -> gateway node

The gateway node selects an appropriate node to enable a relay capability according to a preset selection condition. For example, the gateway node selects node 4 to enable a relay function and sends a relay enable request (enable_relay) to node 4. The request includes address information of node 5. When the relay enable request (enable_relay) passes through node 1, node 1 will first record locally that node 5 is one of end child nodes of relay node 1. After receiving the relay enable request (enable_relay), node 4 enables the relay capability and returns a success reply to the gateway node. Furthermore, node 4 maintains a child node list locally and records that node 5 is one of end child nodes of relay node 4. At the same time, node 4 sends a relay notification message (relay_notification) to node 5 to inform node 5 that a neighboring relay node thereof is node 4.

The communication method employing a Bluetooth network provided in Embodiment 2 of the example embodiments can flexibly configure a minimum number of relay nodes according to an actual network topology, thereby preventing the problem in which many relay nodes in a network result in forwarding of a large number of broadcast packets and consequently affect the throughput of the network.

Further, in the communication method according to some of the example embodiments, the preset selection condition includes: selecting a Bluetooth node provided with a long-term power supply; selecting a Bluetooth node that has high signal strength relative to that of a requesting Bluetooth node compared with other Bluetooth nodes; selecting a Bluetooth node having a longer online duration compared with other Bluetooth nodes; or selecting a Bluetooth node at which the relay configuration request message arrives earlier compared with other Bluetooth nodes.

Specifically, the preset selection conditions may be ranked as follows according to priority levels in descending order: a long-term power supply, signal strength, online duration, and relay configuration request message arrival time. The requesting Bluetooth node refers to a node that sends the relay configuration request message by broadcast. As shown in FIG. 2, the requesting Bluetooth node is node 3. If node 1 is a Bluetooth device provided with a long-term power supply, node 1 can be selected to enable the relay function. If the long-term power supply information is not available, the signal strength of node 3 initiating the request measured by node 1 is compared with the signal strength of node 3 measured by node 2. If the signal strength of node 3 measured by node 1 is stronger, node 1 can be selected to enable the relay function. Determination of the signal strength may be made according to the received signal strength indication (RSSI) of node 1. If the signal strength of each of node 1 and node 2 is the same or similar to the signal strength of node 3, a node having a longer online duration is selected. If the online duration is not available, a node at which a request arrives earlier is selected according to an arrival time of a relay configuration request message.

Further, in some embodiments, the communication method can include the following additional or optional step.

**Step S204:** if it is found that the relay node of the end node has changed, send a child node list update message to the original relay node.

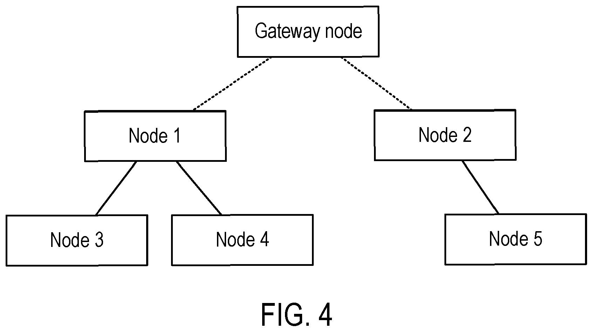

FIG. 4 is a diagram of a change in the topology of the Bluetooth network according to some of the example embodiments. As shown in FIG. 4, assuming that node 5 is moved, and if node 5 consecutively sends data packets three times without receiving an acknowledgment (ACK) reply, it is considered that there is no relay node nearby. Node 5 starts a neighboring node scan (neighbor_discover) and finds that the only neighboring node is node 2, but node 2 does not have the relay capability enabled. Thus, node 5 sends a relay configuration request message (relay_config) by broadcast. Node 2 receives the relay configuration request message (relay_config) and adds address information of node 2 to the relay_config packet, and then forwards the relay_config to the gateway node by broadcast. The gateway node selects node 2 to enable the relay capability and sends a relay enable request (enable_relay) to node 2. The relay enable request includes the address information of node 5. After receiving the enable_relay, node 2 enables the relay capability and returns a success reply to the gateway node. Furthermore, node 2 maintains a child node list locally, records that node 5 is one of end child nodes of relay node 2 and sends a relay_notification message to node 5 to inform node 5 that a neighboring relay node thereof is node 2. At the same time, the gateway node sends a child node list update message (update) to node 4. The message includes the address information of node 5 and is used to instruct node 4 to delete the address information of node 5 from the local child node list.

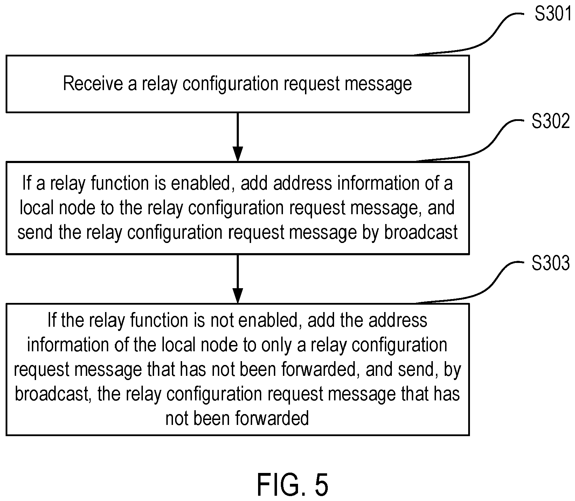

FIG. 5 is a flow diagram illustrating a method employing a Bluetooth network according to some of the example embodiments. As shown in FIG. 5, the method may be executed by a Bluetooth relay node and includes the following steps.

**Step S301:** receive a relay configuration request message.

**Step S302:** if a relay function is enabled, add address information of a local node to the relay configuration request message, and send the relay configuration request message by broadcast.

**Step S303:** if the relay function is not enabled, add the address information of the local node to only a relay configuration request message that has not been forwarded, and sending the relay configuration request message that has not been forwarded by broadcast.

As shown in FIG. 2, node 5 applies to join the Bluetooth network. Similarly, node 5 starts a neighboring node scan (neighbor_discover,) and finds that neighboring nodes include node 2, node 3, and node 4, but none of the nodes has a relay function enabled. Thus, node 5 sends a relay configuration request message (relay_config) to the gateway device, and the message is also sent in the form of a Bluetooth mesh broadcast packet. Node 2, node 3, and node 4 all receive the relay configuration request message (relay_config) and add address information of node 2, node 3, and node 4 to the relay_config packet respectively, and then forward the same by broadcast. The relay_config packet forwarded by node 4 reaches node 1, node 2, and node 3, respectively. Node 2 and node 3 find that the relay_config packet has been forwarded once, and therefore will not forward the packet again. Since node 1 is a relay node, node 1 also adds node address information thereof to the relay_config packet and broadcasts and forwards the relay_config again. Next, the gateway node receives the relay_config packets from four different paths, namely:
1) node 5 -> node 3 -> node 1 -> gateway node
2) node 5 -> node 4 -> node 1 -> gateway node
3) node 5 -> node 2 -> gateway node
4) node 5 -> node 2 -> node 1 -> gateway node

The gateway node selects an appropriate node to enable the relay capability according to a preset selection condition. For example, the gateway node selects node 4 to enable a relay function and sends a relay enable request (enable_relay) to node 4. The request includes address information of node 5. When the relay enable request (enable_relay) passes through node 1, node 1 will first record locally that node 5 is one of end child nodes of relay node 1. After receiving the relay enable request (enable_relay), node 4 enables the relay capability and returns a success reply to the gateway node. Furthermore, node 4 maintains a child node list locally, and records that node 5 is one of end child nodes of relay node 4. At the same time, node 4 sends a relay notification message (relay_notification) to node 5 to inform node 5 that a neighboring relay node thereof is node 4.

Further, in some embodiments, the communication method can include the following additional or optional steps.

Step S304: enable the relay function according to a relay enable request, wherein the relay enable request includes address information of an end node.

Step S305: record the end node in a local node list.

Step S306: send a relay notification message to the end node.

Further, in some embodiments, the method can include: if a child node list update message is received, deleting a changed end node from the local node list according to the child node list update message.

As shown in FIG. 4, assuming that node 5 is moved, and if node 5 consecutively sends data packets three times without receiving an ACK reply, it is considered that there is no relay node around. Node 5 starts a neighboring node scan (neighbor_discover) and finds that the only neighboring node is node 2, but node 2 does not have the relay capability enabled. Thus, node 5 sends a relay configuration request message (relay_config) by broadcast. Node 2 receives the relay configuration request message (relay_config) and adds address information of node 2 to the relay_config packet, and then forwards the relay_config to the gateway node by broadcast. The gateway node selects node 2 to enable the relay capability, and sends a relay enable request (enable_relay) to node 2. The relay enable request includes address information of node 5. After receiving the enable_relay, node 2 enables the relay capability and returns a success reply to the gateway node. Furthermore, node 2 maintains a child node list locally, records that node 5 is one of end child nodes of relay node 2 and sends a relay_notification message to node 5 to inform node 5 that a neighboring relay node thereof is node 2. At the same time, the gateway node sends a child node list update message (update) to node 4. The message includes the address information of node 5 and is used to instruct node 4 to delete the address information of node 5 from the local child node list.

Further, the method can further include: if a network connection fails, disabling the relay function, and sending a relay configuration request message to a neighboring Bluetooth node by broadcast.

For example, as shown in FIG. 2, if node 4 is unable to connect to node 1 due to a position change, and the network connection fails, node 4 will disable the relay function, and serve as an end node to send a relay configuration request message by broadcast, to request, via a neighboring node, the gateway node to configure a relay node therefor, thereby connecting to the Bluetooth network.

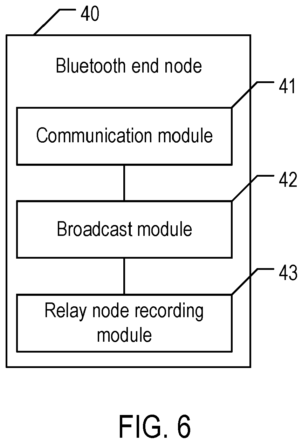

FIG. 6 is a block diagram of a Bluetooth end node according to some of the example embodiments. As shown in FIG. 6, the Bluetooth end node 40 can include a communication module 41 and a broadcast module 42.

The communication module 41 is configured such that if there is a relay node in neighboring Bluetooth nodes, the communication module 41 performs data communication via the relay node.

The broadcast module 42 is configured such that if there is no relay node in the neighboring Bluetooth nodes, the broadcast module 42 sends a relay configuration request message by broadcast to request a gateway node to select and configure a relay node from the neighboring Bluetooth nodes.

Further, the Bluetooth end node in Embodiment 4 of the example embodiments further includes: a relay node recording module 43.

The relay node recording module 43 is configured such that if a relay notification message sent by one of the neighboring Bluetooth nodes is received, the relay node recording module records the neighboring Bluetooth node as a relay node.

Further, in the Bluetooth end node according to the fourth embodiment, the broadcast module 42 is further configured to: send the relay notification message by broadcast.

The Bluetooth end node 40 can implement the communication method shown in FIG. 1. Reference may be made to FIG. 1 for details, which will not be repeated herein.

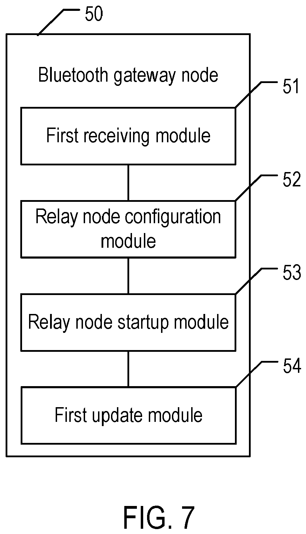

FIG. 7 is a block diagram of a Bluetooth gateway node according to some of the example embodiments. As shown in FIG. 7, the Bluetooth gateway node 50 includes a first receiving module 51, a relay node configuration module 52, and a relay node startup module 53.

The first receiving module 51 is configured to receive a relay configuration request message, wherein the relay configuration request message includes a propagation path having an end node, intermediate nodes, and a gateway node arranged in sequence.

The relay node configuration module 52 is configured to select a relay node from the intermediate nodes of the propagation path according to a preset selection condition.

The relay node startup module 53 is configured to send a relay enable request to the relay node, wherein the relay enable request includes address information of the end node.

Further, in the Bluetooth gateway node 50, the preset selection condition includes: selecting a Bluetooth node provided with a long-term power supply; selecting a Bluetooth node that has high signal strength relative to that of a requesting Bluetooth node compared with other Bluetooth nodes; selecting a Bluetooth node having a longer online duration compared with other Bluetooth nodes; or selecting a Bluetooth node at which the relay configuration request message arrives earlier compared with other Bluetooth nodes.

Further, the Bluetooth gateway node 50 further includes: a first update module 54. The first update module 54 is configured such that if it is found that the relay node of the end node has changed, the first update module 54 sends a child node list update message to the original relay node.

The Bluetooth gateway node 50 is an apparatus for implementing the communication method shown in FIG. 2. Reference may be made to FIG. 2 for details, which will not be repeated herein.

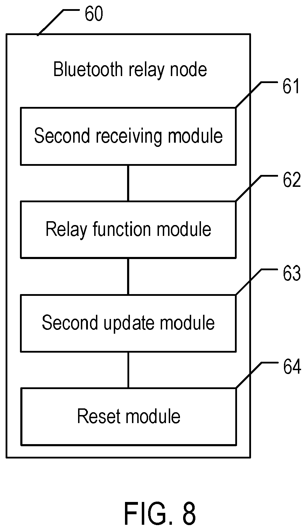

FIG. 8 is a block diagram of a Bluetooth relay node according to some of the example embodiments. As shown in FIG. 8, provided is a Bluetooth relay node 60, including a second receiving module 61 and a relay function module 62.

The second receiving module 61 is configured to receive a relay configuration request message.

The relay function module 62 is configured to: if a relay function is enabled, add address information of a local node to the relay configuration request message, and send the relay configuration request message by broadcast; and if the relay function is not enabled, add the address information of the local node to only a relay configuration request message that has not been forwarded, and send, by broadcast, the relay configuration request message that has not been forwarded.

Further, in the Bluetooth relay node 60, the relay function module 62 is further configured to: enable the relay function according to a relay enable request, wherein the relay enable request includes address information of an end node; record the end node in a local node list; and send a relay notification message to the end node.

Further, the Bluetooth relay node 60 further includes: a second update module 63.

The second update module 63 is configured such that if a child node list update message is received, the second update module 63 deletes a changed end node from the local node list according to the child node list update message.

Further, the Bluetooth relay node 60 further includes: a reset module 64.

The reset module 64 is configured such that if a network connection fails, the reset module 64 disables the relay function, and sends a relay configuration request message to a neighboring Bluetooth node by broadcast.

The Bluetooth relay node 60 is an apparatus for implementing the communication method shown in FIG. 3. Reference may be made to FIG. 3 for details, which will not be repeated herein.

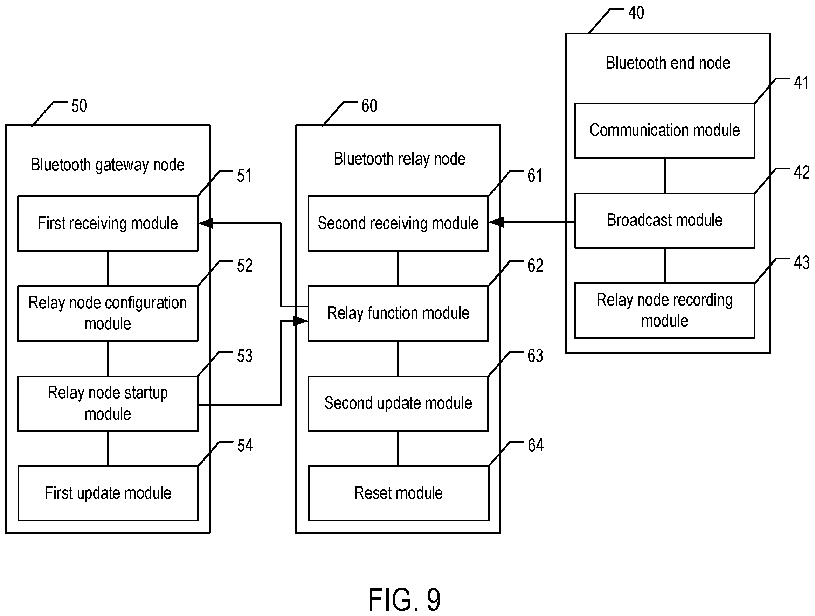

FIG. 9 is a block diagram of a Bluetooth communication network system according to some of the example embodiments. As shown in FIG. 9, the Bluetooth communication network system includes: the Bluetooth end node 40 shown in FIG. 6, the Bluetooth gateway node 50 shown in FIG. 7, and the Bluetooth relay node 60 shown in FIG. 8.

The Bluetooth communication network system uses the Bluetooth end node 40 shown in FIG. 6, the Bluetooth gateway node 50 shown in FIG. 7, and the Bluetooth relay node 60 shown in FIG. 8. Reference may be made to Embodiments 5, 6, and 7 in FIG. 3 for details, which will not be repeated herein.

According to an embodiment of the example embodiments, a storage device is provided. The storage device stores computer program instructions, which are executed according to the method of the example embodiments.

In a typical configuration of the example embodiments, the storage device includes permanent and non-permanent, removable and non-removable media, and can store information by any method or technology. The information may be a computer-readable instruction, a data structure, a means of a program, or other data. Examples of computer storage media include, but are not limited to, a phase change memory (PRAM), a static random access memory (SRAM), a dynamic random access memory (DRAM), other types of random access memories (RAM), read-only memories

(ROM), electrically erasable programmable read-only memories (EEPROM), flash memories or other memory technologies, compact disc read-only memories (CD-ROM), digital versatile disks (DVD) or other optical storage, magnetic tape cassettes, magnetic tape and magnetic disk storage or other magnetic storage devices, or any other non-transmission media, and the computer storage media can be used to store information that can be accessed by computing devices.

According to an embodiment of the example embodiments, provided is a computing device, including: a memory for storing computer program instructions; and a processor for executing the computer program instructions, wherein the computer program instructions, when executed by the processor, trigger the computing device to implement the method according to the example embodiments.

In a typical configuration of the example embodiments, the computing device includes one or a plurality of processors (CPUs), input/output interfaces, network interfaces, and memories.

The memory may include a computer-readable medium in the form of a non-permanent memory, a Random Access Memory (RAM) and/or non-volatile memory or the like, such as a Read-Only Memory (ROM) or a flash memory (flash RAM). The memory is an example of the computer-readable medium.

The computing device referred to in the example embodiments includes, but is not limited to, any electronic product that can perform human-computer interaction with a user (for example, human-computer interaction via a touchpad), such as a mobile electronic product, for example a smart phone, a tablet computer, or the like. The mobile electronic product may use any operating system, such as an Android operating system, an iOS operating system, and the like.

It should be noted that the example embodiments may be implemented in software and/or a combination of software and hardware, for example, using an application specific integrated circuit (ASIC), a general purpose computer, or any other similar hardware device. In some embodiments, the software program of the example embodiments may be executed by a processor to implement the steps or functions described above. Likewise, the software program of the example embodiments (including associated data structures) may be stored in a computer-readable recording medium, e.g., a RAM, a magnetic or optical drive or a floppy disk, or a similar device. In addition, some of the steps or functions of the example embodiments may be implemented using hardware, i.e., a circuit that cooperates with a processor to perform the various steps or functions.

It will be apparent to those skilled in the art that the example embodiments is not limited to the details of the exemplary embodiments described above, but that the example embodiments may be embodied in other specific forms without departing from the spirit or essential features of the example embodiments. Therefore, the embodiments, regardless of viewpoints, shall be regarded as illustrative and nonrestrictive, and the scope of the example embodiments shall be defined by the appended claims rather than the foregoing description; therefore, it is intended to encompass all changes falling within the meaning and scope of equivalents of the claims within the example embodiments. Any reference signs in the claims shall not be construed as limiting the claim involved. Furthermore, it is apparent that the word "comprise" does not exclude other units or steps and the singular form does not exclude the plural form. A plurality of units or means recited in the apparatus claims may also be implemented by one unit or means by using software or hardware. The terms first, second, etc. are used to denote names and do not indicate any particular order.

## Claims

1. A communication method employing a Bluetooth network, **characterized by** comprising:
if there is a relay node in neighboring Bluetooth nodes, performing data communication via the relay node; and
if there is no relay node in the neighboring Bluetooth nodes, sending a relay configuration request message by broadcast to request a gateway node to select and configure a relay node from the neighboring Bluetooth nodes.

2. The communication method according to claim 1, further comprising: if a relay notification message sent by one of the neighboring Bluetooth nodes is received, recording the neighboring Bluetooth node as a relay node.

3. The communication method according to claim 2, further comprising: sending the relay notification message by broadcast.

4. A communication method employing a Bluetooth network, **characterized by** comprising:
receiving a relay configuration request message, wherein the relay configuration request message comprises a propagation path having an end node, intermediate nodes, and a gateway node arranged in sequence; selecting a relay node from the intermediate nodes of the propagation path according to a preset selection condition; and
sending a relay enable request to the relay node, wherein the relay enable request comprises address information of the end node.

5. The communication method according to claim 4, wherein the preset selection condition comprises:
selecting a Bluetooth node provided with a long-term power supply;
selecting a Bluetooth node that has high signal strength relative to that of a requesting Bluetooth node compared with other Bluetooth nodes;
selecting a Bluetooth node having a longer online duration compared with other Bluetooth nodes; or
selecting a Bluetooth node at which the relay configuration request message arrives earlier compared with other Bluetooth nodes.

6. The communication method according to claim 4, further comprising: if it is found that the relay node of the end node has changed, sending a child node list update message to the original relay node.

7. A communication method employing a Bluetooth network, **characterized by** comprising:
receiving a relay configuration request message;
if a relay function is enabled, adding address information of a local node to the relay configuration request message, and sending the relay configuration request message by broadcast; and
if the relay function is not enabled, adding the address information of the local node to only a relay configuration request message that has not been forwarded, and sending, by broadcast, the relay configuration request message that has not been forwarded.

8. The communication method according to claim 7, further comprising:
enabling the relay function according to a relay enable request, wherein the relay enable request comprises address information of an end node;
recording the end node in a local node list; and sending a relay notification message to the end node.

9. The communication method according to claim 8, further comprising: if a child node list update message is received, deleting a changed end node from the local node list according to the child node list update message.

10. The communication method according to claim 8, further comprising: if a network connection fails, disabling the relay function, and sending a relay configuration request message to a neighboring Bluetooth node by broadcast.

11. A Bluetooth end node, **characterized by** comprising:
a communication module configured such that if there is a relay node in neighboring Bluetooth nodes, the communication module performs data communication via the relay node; and
a broadcast module configured such that if there is no relay node in the neighboring Bluetooth nodes, the broadcast module sends a relay configuration request message by broadcast to request a gateway node to select and configure a relay node from the neighboring Bluetooth nodes.

12. The Bluetooth end node according to claim 11, further comprising: a relay node recording module configured such that if a relay notification message sent by one of the neighboring Bluetooth nodes is received, the relay node recording module records the neighboring Bluetooth node as a relay node.

13. The Bluetooth end node according to claim 12, wherein the broadcast module is further configured to: send the relay notification message by broadcast.

14. A Bluetooth gateway node, **characterized by** comprising:
a first receiving module, configured to receive a relay configuration request message, wherein the relay configuration request message comprises a propagation path having an end node, intermediate nodes, and a gateway node arranged in sequence;
a relay node configuration module, configured to select a relay node from the intermediate nodes of the propagation path according to a preset selection condition; and
a relay node startup module, configured to send a relay enable request to the relay node, wherein the relay enable request comprises address information of the end node.

15. The Bluetooth gateway node according to claim 14, wherein the preset selection condition comprises:
selecting a Bluetooth node provided with a long-term power supply;
selecting a Bluetooth node that has high signal strength relative to that of a requesting Bluetooth node compared with other Bluetooth nodes;
selecting a Bluetooth node having a longer online duration compared with other Bluetooth nodes; or
selecting a Bluetooth node at which the relay configuration request message arrives earlier compared with other Bluetooth nodes.

16. The Bluetooth gateway node according to claim 14, further comprising: a first update module configured such that if it is found that the relay node of the end node has changed, the first update module sends a child node list update message to the original relay node.

17. A Bluetooth relay node, **characterized by** comprising: a second receiving module, configured to receive a relay configuration request message; and a relay function module, configured to:
if a relay function is enabled, add address information of a local node to the relay configuration request message, and send the relay configuration request message by broadcast; and
if the relay function is not enabled, add the address information of the local node to only a relay configuration request message that has not been forwarded, and send, by broadcast, the relay configuration request message that has not been forwarded.

18. The Bluetooth relay node according to claim 17, wherein the relay function module is further configured to:
enable the relay function according to a relay enable request, wherein the relay enable request comprises address information of an end node;
record the end node in a local node list; and
send a relay notification message to the end node.

19. The Bluetooth relay node according to claim 17 , further comprising: a second update module configured such that if a child node list update message is received, the second update module deletes a changed end node from the local node list according to the child node list update message.

20. The Bluetooth relay node according to claim 17, further comprising: a reset module configured such that if a network connection fails, the reset module disables the relay function, and sends a relay configuration request message to a neighboring Bluetooth node by broadcast.

21. A Bluetooth communication network system, **characterized by** comprising: the Bluetooth end node according to any one of claims 11 to 13, the Bluetooth gateway node according to any one of claims 14 to 16, and the Bluetooth relay node according to any one of claims 17 to 20.

22. A storage device, **characterized in that** the storage device stores computer program instructions, which are executed using the method according to any one of claims 1 to 10.

23. A computing device, **characterized by** comprising: a memory for storing computer program instructions; and a processor for executing the computer program instructions, wherein the computer program instructions, when executed by the processor, trigger the computing device to implement the method according to any one of claims 1 to 10.
